# EUROPEAN PATENT APPLICATION

(11) **EP 4 773 497 A1**
(43) Date of publication of application: **08.07.2026**
(21) Application number: 23950584.5
(22) Date of filing: 01.09.2023
(51) Int. Cl.: H02M 7/12

(54) **METHOD FOR CONTROLLING POWER CONVERSION DEVICE, AND POWER CONVERSION DEVICE**

(71) Applicant: Renault s.a.s, 92100 Boulogne Billancourt (FR)
(72) Inventor: IWASAKI, Yuichi, Atsugi-shi, Kanagawa, 243-0123 (JP); IKARI, Takayuki, Atsugi-shi, Kanagawa, 243-0123 (JP); OKUBO, Akinori, Atsugi-shi, Kanagawa, 243-0123 (JP); KUWABARA, Yoshikazu, Atsugi-shi, Kanagawa, 243-0123 (JP); YAMAGAMI, Shigeharu, Atsugi-shi, Kanagawa, 243-0123 (JP)
(86) International application number: PCT/IB2023/000519
(87) International publication number: WO 2025/046255

(57) **Abstract**

In a power conversion device (1), a first power conversion circuit (10) and a second power conversion circuit (20) connected in parallel to a pair of input terminals (IN1, IN2) include an inverter circuit (110, 210) and a diode (D11, D21). The inverter circuit (110, 210) includes a switch element (111, 211) for switching directions and an on/off state of a current flowing between the input terminals (IN1, IN2). The first power conversion circuit (10) and the second power conversion circuit (20) are connected to the input terminals (IN1, IN2) in such a manner that the rectification directions of the diodes (D11, D21) are opposite to each other. A control unit (40) controls the switching operation of the switch element (111, 211) so that DC power after rectification using the diode (D11, D21) is alternately output to the output terminal (OUT1, OUT2) at a cycle for switching on/off of the switch element (111, 211).

## Description

### TECHNICAL FIELD

The present invention relates to a method of controlling a power conversion device and a power conversion device.

### BACKGROUND ART

Patent Literature 1 discloses a power conversion circuit in which AC input power is converted into high-frequency AC current using a class-E inverter having an LC resonance circuit, rectified by a rectifying circuit, and output to a load. In the power conversion circuit of Patent Literature 1, a switching frequency of a switch element of the class-E inverter is changed based on an input voltage of the power conversion circuit to achieve low-loss zero voltage switching (ZVS).

### CITATION LIST

### PATENT LITERATURE

Patent Literature 1: Japanese Unexamined Patent Application Publication No. 2021-145433

### SUMMARY OF THE INVENTION

### TECHNICAL PROBLEM

As in Patent Literature 1, a power conversion circuit in which a switch element performs a high frequency switching operation in a high-voltage environment can be realized in a compact configuration. When an output is increased, a plurality of power conversion circuits are connected in parallel and operated to disperse heat generation sources and suppress an increase in heat generation density. In a power conversion circuit, high-frequency and high-voltage switching noise is generated in a switch element that performs high-voltage and high frequency switching operation. When a plurality of power conversion circuits are connected and operated, it is necessary to increase the noise removal capability of a noise removal filter in response to switching noise generated in each power conversion circuit. An increase in noise removal capability may cause an increase in filter size.

An object of the present invention is to suppress an increase in noise superimposed on power supplied from a power conversion device when increasing output of a power conversion device using a power conversion circuit, in which a switch element of an inverter circuit performs high frequency switching operation at a high voltage.

### SOLUTION TO PROBLEM

To solve the problems described above, a power conversion device and a method of controlling a power conversion device according to one aspect of the present invention can be applied to a power conversion device including a pair of input terminals to which AC power is input, a power conversion circuit connected to the pair of input terminals, and a pair of output terminals to which a load is connected. At least two or more power conversion circuits are connected in parallel to the pair of input terminals. The power conversion circuit includes an inverter circuit and a rectifying element. The inverter circuit includes an LC resonance circuit, and generates a high-frequency AC current from the AC power input to the pair of input terminals. The rectifying element rectifies the high-frequency AC current generated in the inverter circuit, and outputs the rectified power to the pair of output terminals. The inverter circuit includes a bidirectional switch for switching directions and an on/off state of a current flowing between a pair of input terminals, and a shunt capacitor connected between the pair of input terminals in parallel with the bidirectional switch. At least two or more power conversion circuits include a first power conversion circuit and a second power conversion circuit which are connected to the pair of input terminals in such a manner that the rectifying directions of the rectifying elements are opposite to each other. Switching operation of the bidirectional switches of the first and second power conversion circuits is controlled. Through this control, the power after rectification using the rectifying element of the first power conversion circuit, and the power after rectification using the rectifying element of the second power conversion circuit, are alternately output to the pair of output terminals at a cycle in which the polarities of the high-frequency AC current are switched.

### ADVANTAGEOUS EFFECTS OF INVENTION

According to the present invention, when increasing output of a power conversion device using a power conversion circuit, in which a switch element of an inverter circuit performs high frequency switching operation at a high voltage, it is possible to suppress an increase in noise superimposed on power supplied from a power conversion device.

### BRIEF DESCRIPTION OF THE DRAWINGS

[FIG. 1] FIG. 1 is a diagram illustrating a configuration of a power conversion device according to a first embodiment of the present invention.
[FIG. 2] FIG. 2 is a diagram illustrating a relationship between an input voltage of the power conversion device in FIG. 1 and a control signal for a switch element of each power conversion circuit.
[FIG. 3] FIG. 3 is a diagram illustrating a relationship between control signals for switch elements connected to a common input terminal in FIG. 1.
[FIG. 4] FIG. 4 is a diagram illustrating a relationship between output voltages of each power conversion circuit in FIG. 1.
[FIG. 5] FIG. 5 is a diagram illustrating a configuration of a power conversion device according to a second embodiment of the present invention.

### DESCRIPTION OF EMBODIMENTS

Hereinafter, an embodiment of the present invention and a modification thereof will be described with reference to the drawings. In the description of the drawings, the same reference numerals are given to the same parts, and description thereof will be omitted.

### (First Embodiment)

### (Configuration of Power Conversion Device according to First Embodiment)

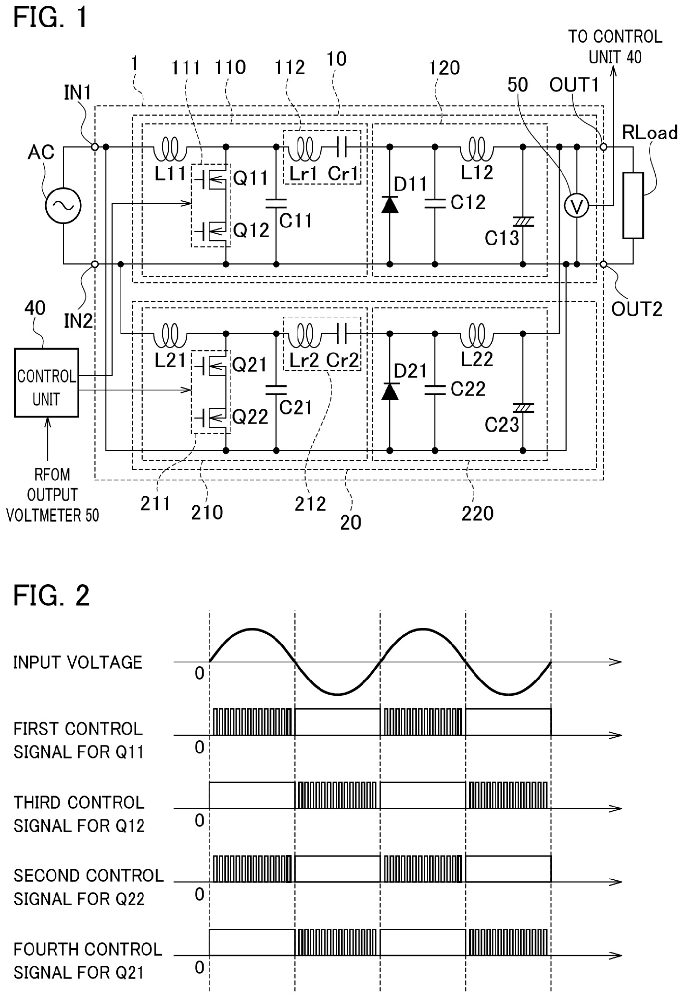

FIG. 1 is a diagram illustrating a configuration of a power conversion device according to the first embodiment, to which the present invention is applied. The power conversion device 1 according to the first embodiment includes a pair of input terminals IN1 and IN2 to which AC power AC is input, two power conversion circuits 10 and 20 connected to the input terminals IN1 and IN2, a pair of output terminals OUT1 and OUT2, and a control unit 40. A DC load RLoad is connected to the pair of output terminals OUT1 and OUT2 as a load. By connecting the two power conversion circuits 10 and 20 in parallel between the pair of input terminals IN1 and IN2 and the pair of output terminals OUT1 and OUT2, the power conversion device 1 can increase the output. The polarity of the input voltage of the power conversion device 1 is switched to be positive or negative by the AC power of the AC power source AC input between the pair of input terminals IN1 and IN2. Hereinafter, the two power conversion circuits 10 and 20 may be referred to as first power conversion circuit 10 and second power conversion circuit 20, respectively. The pair of input terminals IN1 and IN2, and the pair of output terminals OUT1 and OUT2, may also be referred to as first input terminal IN1 and second input terminal IN2, and a first output terminal OUT1 and a second output terminal OUT2, respectively, as necessary. The two power conversion circuits 10 and 20 are connected in parallel to the pair of input terminals IN1 and IN2.

The first power conversion circuit 10 includes an inverter circuit 110 and a rectifying circuit 120. The second power conversion circuit 20 includes an inverter circuit 210 and a rectifying circuit 220. The first power conversion circuit 10 and the second power conversion circuit 20 are connected to the pair of input terminals IN1 and IN2 so that the rectifying directions of the rectifying elements of the rectifying circuits 120 and 220 are opposite to each other. The first power conversion circuit 10 and the second power conversion circuit 20 are connected to the pair of output terminals OUT1 and OUT2 so that the rectifying directions of the rectifying elements of the rectifying circuits 120 and 220 are the same.

The inverter circuit 110 of the first power conversion circuit 10 generates a high-frequency AC current from the AC power AC input to the first input terminal IN1 and the second input terminal IN2. The inverter circuit 110 includes a choke inductor L11, a switch element 111, a shunt capacitor C11, and an LC resonance circuit 112.

The switch element 111 is connected between the first input terminal IN1 and the second input terminal IN2. The choke inductor L11 is connected in series to a connection point between the first input terminal IN1 and the switch element 111. The shunt capacitor C11 is connected in parallel to the switch element 111. In consideration of the symmetry of the inverter circuit 110, another choke inductor L11 may be further provided between the second input terminal IN2 and the switch element 111 in addition to the choke inductor L11 between the first input terminal IN1 and the switch element 111. In the following description, it is assumed that the choke inductor L11 is provided only between the first input terminal IN1 and the switch element 111 as illustrated in FIG. 1.

The LC resonance circuit 112 is a series circuit of a resonance inductor Lr1 and a resonance capacitor Cr1. The resonance inductor Lr1 is connected to a connection point between the choke inductor L11 and the switch element 111. The inverter circuit 110 generates a high-frequency resonance current in the LC resonance circuit 112 by switching the switch element 111, and generates a high-frequency AC current from the AC power AC input to the pair of input terminals IN1 and IN2.

The switch element 111 includes a series circuit of two switch elements. The switch elements are semiconductor switches called power transistors. For example, a metal oxide semiconductor field effect transistor (MOSFET), which is a unipolar transistor, can be used for the semiconductor switch. In this embodiment, a series circuit of two MOSFETs Q11 and Q12 with their source terminals connected to each other is used as a series circuit of a first switch element and a second switch element that configure the switch element 111. For example, an insulated gate bipolar transistor (IGBT), which is a bipolar transistor, can be used for the semiconductor switch in addition to the MOSFET. The switch element 111 using the IGBT can be configured by, for example, a bidirectional IGBT in which two IGBTs are connected in antiparallel. The switch element 111 using the IGBT can be configured by a reverse conducting IGBT (RC-IGBT) in which one IGBT and one freewheeling diode (FWD) are connected in antiparallel.

The rectifying circuit 120 includes a diode D11 serving as a rectifying element, a rectifier side capacitor C12, an inductor L12, and an output side capacitor C13. The cathode of the diode D11 is connected to the resonance capacitor Cr1, and is conductive with the first input terminal IN1 and the first output terminal OUT1. The anode of the diode D11 is connected to the shunt capacitor C11, and is conductive with the second input terminal IN2 and the second output terminal OUT2. The rectifier side capacitor C12 is connected in parallel with the diode D11. The inductor L12 is connected to the cathode of the diode D11, the rectifier capacitor C12, and the first output terminal OUT1. The output side capacitor C13 is connected between the first output terminal OUT1 and the second output terminal OUT2. The rectifying circuit 120 rectifies a resonance current of the LC resonance circuit 112 using the diode D11, and outputs an obtained DC voltage to the first output terminal OUT1 and the second output terminal OUT2.

The inverter circuit 210 of the second power conversion circuit 20 generates a high-frequency AC current from the AC power AC input to the pair of input terminals IN1 and IN2. The inverter circuit 210 includes a choke inductor L21, a switch element 211, a shunt capacitor C21, and an LC resonance circuit 212. The choke inductor L21 and the shunt capacitor C21 in the inverter circuit 210 are configured in the same manner as the choke inductor L11 and the shunt capacitor C11 in the inverter circuit 110.

The LC resonance circuit 212 is a series circuit of a resonance inductor Lr2 and a resonance capacitor Cr2. The resonance inductor Lr2 is connected to a connection point between the choke inductor L21 and the switch element 211. The inverter circuit 210 generates a high-frequency resonance current in the LC resonance circuit 212 by switching the switch element 211, and generates a high-frequency AC current from the AC power AC input to the pair of input terminals IN1 and IN2.

The switch element 211 includes a series circuit of two switch elements. The switch elements are, for example, semiconductor switches using MOSFETs and IGBTs. In this embodiment, as a series circuit of two semiconductor switches of the switch element 211, a series circuit of two MOSFETs Q21 and Q22 with their source terminals connected to each other is used, as in the case of the switch element 111 of the inverter circuit 110.

The rectifying circuit 220 includes a diode D21, a rectifier side capacitor C22, an inductor L22, and an output side capacitor C23, as rectifying elements. The diode D21, the rectifier side capacitor C22, the inductor L22, and the output side capacitor C23 are configured in the same manner as the diode D11, the rectifier side capacitor C12, the inductor L12, and the output side capacitor C13 in the rectifying circuit 120. The rectifying direction of the diode D21 with respect to the input terminals IN1 and IN2 is opposite to that of the diode D11. The cathode of the diode D21 is conductive with the second input terminal IN2 and the first output terminal OUT1, and the anode of the diode D11 is conductive with the first input terminal IN1 and the second output terminal OUT2. The rectifying circuit 220 rectifies the resonance current of the LC resonance circuit 212 using the diode D21, and outputs an obtained DC voltage to the first output terminal OUT1 and the second output terminal OUT2.

The first power conversion circuit 10 and the second power conversion circuit 20 are connected to the pair of input terminals IN1 and IN2 in such a manner that the rectifying directions of the diodes D11 and D21 are opposite to each other. In the first power conversion circuit 10, the cathode of the diode D11 of the rectifying circuit 120 is connected to the input terminal IN1, and the anode of the diode D11 is connected to the input terminal IN2. In the first power conversion circuit 10, the MOSFET Q11 of the inverter circuit 110 is connected to the input terminal IN1, and the MOSFET Q12 is connected to the input terminal IN2. In the second power conversion circuit 20, the anode of the diode D21 of the rectifying circuit 220 is connected to the input terminal IN1, and the cathode of the diode D21 is connected to the input terminal IN2. In the second power conversion circuit 20, the MOSFET Q21 of the inverter circuit 210 is connected to the input terminal IN1, and the MOSFET Q22 is connected to the input terminal IN2.

When the MOSFET Q11 and Q12 are used as the switch element 111 in the inverter circuit 110 of the first power conversion circuit 10, the parasitic capacitances of the MOSFET Q11 and Q12 may be used as the shunt capacitor C11. The shunt capacitor C11 may be configured by components used for other purposes, such as the parasitic capacitances of the MOSFET Q11 and Q12. Of course, the shunt capacitor C11 may be configured by a component dedicated to shunting. In the inverter circuit 210 of the second power conversion circuit 20, the shunt capacitor C21 in the case where the MOSFETs Q21 and Q22 are used for the switch element 211 can be configured in the same manner as the shunt capacitor C11 in the inverter circuit 110.

In the switch element 111 of the inverter circuit 110, while one of the MOSFETs Q11 and Q12 is on with 100% duty, the other element repeats turning on/off with less than 100% duty. The switch element 111 can function as a bidirectional switch by switching the switch element 111 between an element that turns on with 100% duty and an element that turns on/off with less than 100% duty. In the inverter circuit 210, the switch element 211 can also function as a bidirectional switch by turning the MOSFETs Q21 and Q22 on/off in the same manner as the MOSFETs Q11 and Q12.

The switch elements 111 and 211 that function as bidirectional switches can switch the direction of currents flowing through the switch elements 111 and 211 between a direction from the MOSFETs Q11 and Q21 toward the MOSFETs Q12 and Q22, and an opposite direction. When the switch elements 111 and 211 are bidirectional switches as in this embodiment, the switch elements 111 and 211 respond to positive and negative input voltages of the power conversion circuits 10 and 20. When the switch elements 111 and 211 are bidirectional switches, the number of elements through which an input current passes in the power conversion circuits 10 and 20 is reduced compared to when the switch elements 111 and 211 are not bidirectional switches. By reducing the number of elements through which an input current passes in the power conversion circuits 10 and 20, high-efficiency power conversion by the power conversion circuits 10 and 20 can be achieved.

When the switch elements 111 and 211 perform zero voltage switching (ZVS), switching is performed while both end voltages of the switch elements 111 and 211 are zero. When switching is performed while both end voltages of the switch elements 111 and 211 are zero, loss while the switch elements 111 and 211 are turned on becomes zero. When the switch elements 111 and 211 perform switching satisfying the condition of ZVS, loss due to switching is reduced, and high-frequency switching of the switch elements 111 and 211 becomes possible. When the switch elements 111 and 211 are switched at high frequencies, the inductors and capacitors in the inverter circuits 110 and 210 can be made smaller. By making the inductors and capacitors in the inverter circuits 110 and 210 smaller, an input current of the power converter 1 can be converted into high-frequency AC current by the inverter circuits 110 and 210 with high efficiency.

When the switch elements 111 and 211 are turned on and off at the resonance frequency of the resonance circuit in the inverter circuits 110 and 210, switching satisfying the condition of ZVS can be performed. A control unit 40 controls the switch elements 111 and 211 to perform switching satisfying at least the condition of ZVS. In general, an inverter whose switch element performs switching operation satisfying the condition of ZVS is called a quasi-E-class inverter. In general, an inverter whose switch element performs switching operation satisfying both the conditions of ZVS and zero derivative switching (ZDS) is called an E-class inverter. The inverter circuits 110 and 210 can operate as quasi-E-class inverters or E-class inverters by the control of the switch elements 111 and 211 performed by the control unit 40.

The control unit 40 controls the switching operation of the switch elements 111 and 211 in the inverter circuits 110 and 210. In this embodiment, a case where the control unit 40 controls the switching operation of the switch elements 111 and 211 so that the inverter circuits 110 and 210 operate as quasi-E-class inverters will be described. The control unit 40 can implement the control method of the power conversion device 1 according to this embodiment by performing the control described below.

### (Control Signals of MOSFET Q11, Q12, Q21, and Q22)

The control unit 40 turns the MOSFETs Q11, Q12, Q21, and Q22 of the switch elements 111 and 211 on and off using the control signals illustrated in FIG. 2, and switches the switch elements 111 and 211 at zero voltage.

The MOSFET Q11 of the switch element 111 and the MOSFET Q22 of the switch element 211 connected to the first input terminal IN1 are controlled by the first control signal and the second control signal, respectively. As illustrated in FIG. 2, the first control signal and the second control signal repeat a high frequency turning on/off with a duty of less than 100% in a section where the voltage of the AC power input to the input terminals IN1 and IN2 is positive (+). The first control signal and the second control signal are fixed to ON with a duty of 100% in a section where the voltage of the AC power input to the input terminals IN1 and IN2 is negative (-).

The control signals of the MOSFET Q12 of the switch element 111 and the MOSFET Q21 of the switch element 211 connected to the second input terminal IN1 are controlled by the third control signal and the fourth control signal, respectively. As illustrated in FIG. 2, the third control signal and the fourth control signal repeat a high frequency turning on/off with a duty of less than 100% in a section where the voltage of the AC power input to the input terminals IN1 and IN2 is negative (-). The third control signal and the fourth control signal are fixed to ON with a duty of 100% in a section where the voltage of the AC power input to the input terminals IN1 and IN2 is positive (+).

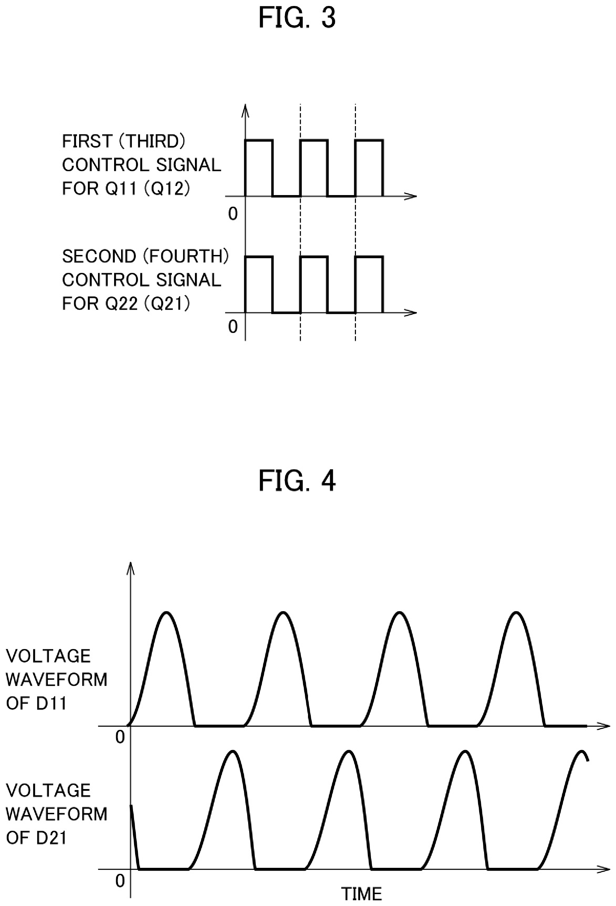

The first control signal and the second control signal can be, for example, a signal for synchronously turning on the MOSFETs Q11 and Q22. In this embodiment, the first control signal and the second control signal rise from OFF to ON in synchronization, as illustrated in FIG. 3. The MOSFETs Q11 and Q22 are turned ON in synchronization by the first control signal and the second control signal. The first control signal and the second control signal can be, for example, a signal that causes the MOSFETs Q11 and Q22 to turn on or turn off with the same cycle in a section in which turning on/off is repeated with a high frequency. In this embodiment, the first control signal and the second control signal are turned on/off with the same frequency, as illustrated in FIG. 3. The frequency of the section in which the first control signal and the second control signal repeat a high frequency turning on/off can be, for example, the resonance frequency of the LC resonance circuits 112 and 212 of the switch elements 111 and 211.

The rise of the first control signal and the second control signal may have an error within an allowable range. The allowable range of the error with respect to the rise of the first control signal and the second control signal can be a range in which an effect described below by the power conversion device 1 according to this embodiment is substantially obtained, and can be determined, for example, by experiment. The first control signal and the second control signal may be turned on/off with a frequency difference within a predetermined range including zero. The allowable range of the frequency difference between the first control signal and the second control signal can be a range in which an effect described below is substantially obtained by the power conversion device 1 according to this embodiment, and can be determined, for example, by experiment.

The third control signal and the fourth control signal can be, for example, a signal for synchronously turning on the MOSFETs Q12 and Q21. In this embodiment, the third control signal and the fourth control signal also rise from off to on in synchronization, as illustrated in FIG. 3. The MOSFETs Q12 and Q21 are synchronously turned on by the third control signal and the fourth control signal. The third control signal and the fourth control signal can be, for example, a signal for turning the MOSFETs Q12 and Q21 on and off at the same cycle in a section where the high frequency is repeatedly turned on and off. In this embodiment, the third control signal and the fourth control signal are also turned on and off at the same frequency, as illustrated in FIG. 3. The frequency of the section where the third control signal and the fourth control signal are repeatedly turned on and off at the high frequency can be, for example, the resonance frequency of the LC resonance circuits 112 and 212 of the switch elements 111 and 211. The rise and turning on/off of the third control signal and the fourth control signal may have the same error and frequency difference as those of the first control signal and the second control signal. The allowable range of the error and frequency difference of the third control signal and the fourth control signal can be, for example, the same as those of the first control signal and the second control signal.

### (Operation and Effect of Power Conversion Device 1 of First Embodiment)

Under the control of the control unit 40, in the inverter circuit 110 of the first power conversion circuit 10, a high-frequency AC current caused by turning the MOSFET Q11 on/off flows in the direction from the first input terminal IN1 to the second input terminal IN2 in the section where the AC power voltage is positive (+). In the section where the AC power voltage is negative (-), a high-frequency AC current caused by turning the MOSFET Q12 on/off flows in the direction from the second input terminal IN2 to the first input terminal IN1. Under the control of the control unit 40, in the inverter circuit 210 of the second power conversion circuit 20, a high-frequency AC current caused by turning the MOSFET Q22 on/off flows in the direction from the first input terminal IN1 to the second input terminal IN2 in the section where the AC power voltage is positive (+). In the section where the AC power voltage is negative (-), a high-frequency AC current caused by turning the MOSFET Q21 on/off flows in the direction from the second input terminal IN2 to the first input terminal IN1.

Under the control of the control unit 40, high-frequency AC currents which have passed through the switch elements 111 and 211 flow into the diodes D11 and D21 of the rectifying circuits 120 and 220 from opposite directions in the section where the AC power voltage is positive (+). High-frequency AC currents which have passed through the switch elements 111 and 211 flow into the diodes D11 and D21 of the rectifying circuits 120 and 220 from opposite directions in the section where the AC power voltage is negative (-), in a direction opposite to that of the section where the AC power voltage is positive (+). The polarity of the AC current flowing into the diode D11 and the polarity of the AC current flowing into the diode D21 are reversed. There is a phase shift of 180° between the AC current flowing into the diode D11 and the AC current flowing into the diode D21. The alternating current flowing into the diodes D11 and D21 alternately passes through the diodes D11 and D21 at a cycle in which the polarity of the flowing alternating current is switched. As illustrated in FIG. 4, the rectified current passing through the diodes D11 and D21 exhibits a rectified waveform on the plus (+) side with a phase shift of 180°. The DC power having this rectified waveform is smoothed by the output side capacitors C13 and C23 of the rectifying circuits 120 and 220, and is output to the pair of output terminals OUT1 and OUT2.

The first power conversion circuit 10 and the second power conversion circuit 20 are connected to the pair of output terminals OUT1 and OUT2 so that the rectifying directions of the rectifying elements of the rectifying circuits 120 and 220 are the same. The smoothed DC power after rectification by the diode D11 and the DC power after rectification by the diode D21 are alternately output to the pair of output terminals OUT1 and OUT2. The noise present in the DC power after rectification by the diodes D11 and D21 is not simultaneously output to the output terminals OUT1 and OUT2. Therefore, a large noise generated by adding the noise present in the DC power after rectification by the diodes D11 and D21 does not appear at the output terminals OUT1 and OUT2 to which the DC power converted in the power conversion circuits 10 and 20 is output.

When the diodes D11 and D21 have a cooler (not illustrated) such as a heat sink, parasitic capacitance may occur between the diodes D11 and D21 and the cooler. When the parasitic capacitance is generated in the diodes D11 and D21, the parasitic capacitance of the diodes D11 and D21 passes a current in the direction from the cathode to the anode, which does not pass through the diodes D11 and D21. The current which has passed due to the parasitic capacitance of the diode D11 becomes a common mode current that has the same phase as, but is reversed in polarity to, the current passed from the anode to the cathode of the diode D21 during the same period. The current which has passed due to the parasitic capacitance of the diode D21 becomes a common mode current that has the same phase as, but is opposite in polarity to, the current which has passed from the anode to the cathode of the diode D11 during the same period. Since the switch elements 111 and 211 includes MOSFET Q11 and MOSFET Q22 which are turned on and off synchronously and MOSFET Q12 and MOSFET Q21 which are turned on and off synchronously, the switching operation of the switch elements 111 and 211 is performed at the same timing.

The noise generated by the switching operation of the switch elements 111 and 211 is superimposed on the currents passed through the diodes D11 and D21 and the currents which has passed due to the parasitic capacitances of the diodes D11 and D21 at the same timing. The noise component of the current which has passed due to the parasitic capacitance of the diode D 11 is canceled by the noise component of the current which has passed through the diode D21 during the same period. The noise component of the current which has passed due to the parasitic capacitance of the diode D21 is canceled by the noise component of the current which has passed through the diode D11 during the same period. Even when the parasitic capacitances of the diodes D11 and D21 pass through the currents that do not pass through the diodes D11 and D21 during the period when the currents pass through the diodes D11 and D21, the noise superimposed on the respective currents is not added up at the output terminals OUT1 and OUT2.

In this embodiment, when the two power conversion circuits 10 and 20 are connected in parallel to increase the output of the power conversion device 1, the noise generated in the power conversion circuits 10 and 20 is controlled to not simultaneously be output to the output terminals OUT1 and OUT2 to be added together to form significant noise. Since the noise generated in the power conversion circuits 10 and 20 does not appear at the output terminals OUT1 and OUT2 in a large amplitude, the noise superimposed on the power supplied to the load RLoad connected to the output terminals OUT1 and OUT2 can be controlled so it not increase. When the noises generated in the power conversion circuits 10 and 20 are filtered out, a filter corresponding to the magnitude of the noises generated in the power conversion circuits 10 and 20 may be provided in the power conversion circuits 10 and 20. When the noise generated in the power conversion circuits 10 and 20 is filtered out, a filter having a removal capability corresponding to a large noise generated by adding up the noise generated is not required, so that an increase in the size of the noise filter due to the increase in output of the power conversion device 1 can be suppressed.

The control unit 40 controls the switching operation of the switch elements 111 and 211 of the power conversion circuits 10 and 20, so that the operation of the power conversion device 1, in which the DC power converted in the two power conversion circuits 10 and 20 is alternately output to the output terminals OUT1 and OUT2, can be achieved. This control may be, for example, a control for switching the switch elements 111 and 211 so that directions of currents flowing between the pair of input terminals IN1 and IN2 are reversed between the first power conversion circuit 10 and the second power conversion circuit 20. With this control, even when the power conversion device 1 is increased in output by connecting the two power conversion circuits 10 and 20 in parallel, the increase in the noise of the power supplied to the load RLoad connected to the output terminals OUT1 and OUT2 can be suppressed.

The control unit 40 switches the MOSFET Q11 of the switch element 111 and the MOSFET Q22 of the switch element 211, which are connected to the first input terminal IN1 using the first and second control signals whose rising edges are synchronized. The control unit 40 switches the MOSFET Q12 of the switch element 111 and the MOSFET Q21 of the switch element 211, which are connected to the second input terminal IN2, using the third and fourth control signals whose rising edges are synchronized. When the rising edges of the first and second control signals are synchronized, and the rising edges of the third and fourth control signals are synchronized, turning on of the MOSFETs Q11 and Q22 is synchronized with turning off of the MOSFET Q12 and Q21. Further, turning off of the MOSFETs Q11 and Q22 and turning on of the MOSFETs Q12 and Q21 are synchronized. This synchronization increases the accuracy with which the DC power passing through the diodes D11 and D21 in the two power conversion circuits 10 and 20 is alternately output to the output terminals OUT1 and OUT2. With this increase in accuracy, the noise component of the current which has passed due to the parasitic capacitances of the diodes D11 and D21 is precisely canceled by the noise component of the current passed through the diodes D11 and D21 during the same period. By further ensuring that the DC power of the power conversion circuits 10 and 20 is alternately output to the output terminals OUT1 and OUT2, the noise level of the power supplied from the output terminals OUT1 and OUT2 to the load RLoad can be precisely suppressed.

The control unit 40 performs switching operation of the MOSFET Q11 of the switch element 111 and the MOSFET Q22 of the switch element 211, which are connected to the first input terminal IN1, using first and second control signals which are turned on and off at a frequency difference within a predetermined range including zero. The control unit 40 performs switching operation of the MOSFET Q12 of the switch element 111 and the MOSFET Q21 of the switch element 211, which are connected to the second input terminal IN2, using third and fourth control signals which are turned on and off at a frequency difference within a predetermined range including zero. When the frequency difference between the first and second control signals is set to a frequency difference within a predetermined range including zero, the turn-on and turn-off timings of the MOSFET Q11 and Q22 are easily aligned in succession. When the frequency difference between the third and fourth control signals is set to a frequency difference within a predetermined range including zero, the turn-on and turn-off timings of the MOSFETs Q12 and Q21 are easily aligned in succession. Through the timings are aligned in succession, the noise component of the current which has passed due to the parasitic capacitances of the diodes D11 and D21 is canceled in succession by the noise component of the current passed through the diodes D11 and D21 during the same period. By aligning the turn-on and turn-off timings of the MOSFETs Q12 and Q21 in succession, the timing at which the DC power output to the output terminals OUT1 and OUT2 is switched between the power conversion circuits 10 and 20 can be aligned in succession. By aligning the timings in succession, the noise level of the power supplied from the output terminals OUT1 and OUT2 to the load RLoad can be continuously suppressed.

### (Modification of First Embodiment)

The control unit 40 may measure the voltage of DC power output to the output terminals OUT1 and OUT2 with an output voltmeter 50 illustrated in FIG. 1, for example, and determine the balance between the DC power of the first power conversion circuit 10 and the DC power of the second power conversion circuit 20, based on the measured voltage. When determining that the DC power of the first power conversion circuit 10 and the DC power of the second power conversion circuit 20 are not balanced, the control unit 40 may adjust control contents of at least one of the switch element 111 or the switch element 211, based on the voltage measured by the output voltmeter 50. When determining that the DC power of the first power conversion circuit 10 exceeds the DC power of the second power conversion circuit 20, the control unit 40 may lower the duty ratio of the first and second control signals. Instead of lowering the duty ratio of the first and second control signals, the control unit 40 may raise the duty ratio of the third and fourth control signals. The control unit 40 may lower the duty ratio of the first and second control signals, and increase the duty ratio of the third and fourth control signals. Through the control unit 40 performs control in this manner, the DC power of the first power conversion circuit 10 and the DC power of the second power conversion circuit 20 can be equalized throughout the power conversion device 1. This equalization allows the noise component of the current which has passed due to the parasitic capacitances of the diodes D11 and D21 to be precisely canceled by the noise component of the current passed through the diodes D11 and D21 during the same period. The control contents of the switch elements 111 and 211 in the power conversion circuits 10 and 20 are adjusted by the control unit 40, based on the voltage of the DC power output to the output terminals OUT1 and OUT2, so that it is possible to efficiently suppress the increase of the noise of the DC power.

### (Second Embodiment)

### (Configuration of Power Conversion Device according to Second Embodiment)

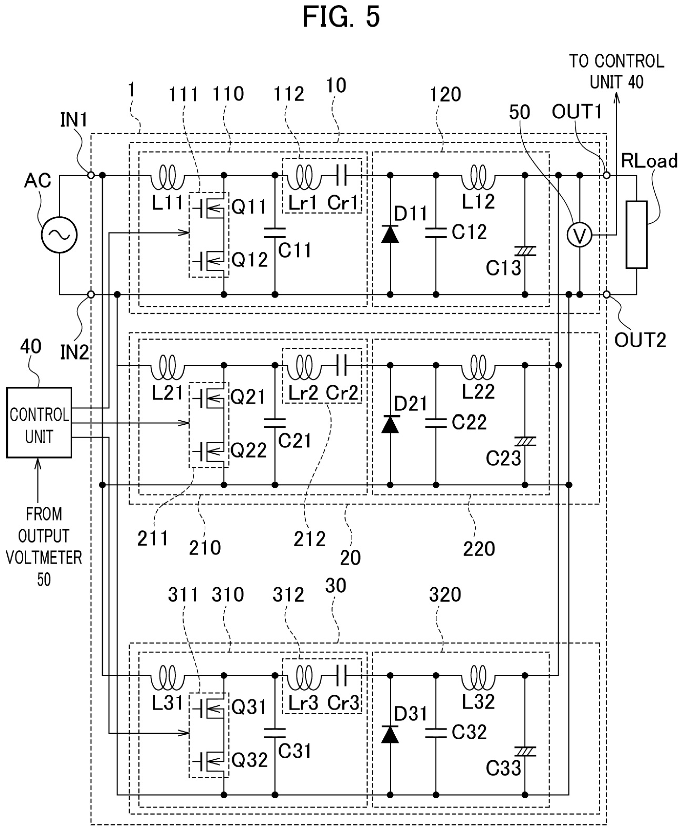

FIG. 5 is a diagram illustrating the configuration of the power conversion device according to a second embodiment, to which the present invention is applied. In the power conversion device 1 according to the second embodiment, the number of power conversion circuits connected in parallel between the pair of input terminals IN1 and IN2 and the pair of output terminals OUT1 and OUT2 is increased to three. FIG. 5 illustrates a case where the three power conversion circuits are configured by two first power conversion circuits 10 and 30 and one second power conversion circuit 20.

The inverter circuit 310 in the third power conversion circuit 30 generates a high-frequency AC current from the AC power AC input to the pair of input terminals IN1 and IN2. The inverter circuit 310 includes a choke inductor L31, a switch element 311, a shunt capacitor C31, and an LC resonance circuit 312. The choke inductor L31 and the shunt capacitor C31 in the inverter circuit 310 are configured in as same manner as the choke inductor L11 and the shunt capacitor C11 in the inverter circuit 110. The LC resonance circuit 312 is a series circuit of a resonance inductor Lr3 and a resonance capacitor Cr3, and is configured in the same manner as the LC resonance circuit 112 in the inverter circuit 110. The switch element 311 uses a series circuit of two MOSFETs Q31 and Q32 with their source terminals connected to each other as a series circuit of two semiconductor switches including a first switch element and a second switch element, in the same manner as the switch element 111 of the inverter circuit 110.

The rectifying circuit 320 includes a diode D31, a rectifier side capacitor C32, an inductor L32, and an output side capacitor C33, as rectifying elements. The diode D31, the rectifier side capacitor C32, the inductor L32, and the output side capacitor C33 are configured in the same manner as the diode D11, the rectifier side capacitor C12, the inductor L12, and the output side capacitor C13 of the rectifying circuit 120, respectively. The rectification direction of the diode D31 with respect to the input terminals IN1 and IN2 is the same as that of the diode D11. The cathode of the diode D31 is conductive with the first input terminal IN1 and the first output terminal OUT1, and the anode of the diode D31 is conductive with the second input terminal IN2 and the second output terminal OUT2. The rectifying circuit 320 rectifies the resonance current of the LC resonance circuit 312 using the diode D31, and outputs the obtained DC voltage to the first output terminal OUT1 and the second output terminal OUT2.

The third power conversion circuit 10 is connected to the pair of input terminals IN1 and IN2 in such a manner that the rectification direction of the diode D11 is reversed compared to the rectification direction of the diode D21 of the second power conversion circuit 20. In the third power conversion circuit 30, the cathode of the diode D31 of the rectifying circuit 320 is connected to the input terminal IN1, and the anode of the diode D31 is connected to the input terminal IN2. In the third power conversion circuit 30, the MOSFET Q31 is connected to the input terminal IN1, and the MOSFET Q32 is connected to the input terminal IN2, in the inverter circuit 310. In the inverter circuit 310 of the third power conversion circuit 30, the shunt capacitor C31 can be configured in the same manner as the shunt capacitor C11 in the inverter circuit 110 when the MOSFET Q31 and Q32 are used for the switch element 311.

For the switch element 311 in the inverter circuit 310, while one of the MOSFET Q31 and Q32 is on with a duty of 100%, the other element repeats turning on/off with a duty of less than 100%. The switch element 311 can function as a bidirectional switch by switching the switch element 311 which is turned on with 100% duty and the switch element which is turned on and off with less than 100% duty.

In the second embodiment, the control unit 40 can perform a method of controlling the power conversion device 1 according to the present embodiment by performing control described below. For example, the control unit 40 can control switching operation of the switch element 311 in the inverter circuit 310 in the same manner as the switching operation in the switch element 111 of the inverter circuit 110. For example, the control unit 40 may turn the MOSFETs Q31 and Q32 in the third power conversion circuit 30 on and off using the same control signals as the first control signals and the second control signals for the MOSFETs Q11 and Q12 of the first power conversion circuit 10. The switch element 311 can be switched at zero voltage by turning the MOSFETs Q31 and Q32 on and off by the control signals. The control unit 40 can set control contents so that the sum of the DC power outputs to the output terminals OUT1 and OUTPUT 2 in the first and third power conversion circuits 10 and 30 is balanced with the DC power outputs to the output terminals OUT1 and OUT2 in the second power conversion circuit 20. For example, the control unit 40 may set the duty ratio of the control signals of the MOSFETs Q11, Q12, Q31 and Q32 to half that of the control signals of the MOSFETs Q21 and Q22 in a section where the control signals are turned on and off with a duty of less than 100%. The duty ratio of the control signals in a section where the MOSFETs Q11, Q12, Q31 and Q32 are turned on and off with a duty of less than 100% may be different between the control signals of the MOSFETs Q11 and Q12, and the control signals of the MOSFETs Q31 and Q32.

### (Effect of Power Conversion Device 1 of Second Embodiment)

In the second embodiment, the situation that occurs in the first power conversion circuit 10 according to the first embodiment occurs in a distributed manner in the first power conversion circuit 10 and the third power conversion circuit 30. In the second embodiment, the DC power after rectification by the diodes D11 and D31, and the DC power after rectification by the diode D21, are alternately output to the pair of output terminals OUT1 and OUT2 after being smoothed. The noise present in the DC power after rectification by the diodes D11 and D31, and the noise present in the DC power after rectification by the diode D21, are not simultaneously output to the output terminals OUT1 and OUT2. Therefore, a large noise generated by adding the noise present in the DC power after rectification by the diodes D11, D21 and D31 does not appear at the output terminals OUT1 and OUT2 to which the DC power converted in the respective power conversion circuits 10, 20 and 30 is output.

When the diode D31 in the third power conversion circuit 30 includes a cooler (not illustrated) similar to the diodes D11 and D21, a parasitic capacitance is also generated between the diode D31 and the cooler. When the parasitic capacitance is generated in the diode D31, a current in the direction from the cathode to the anode, which does not pass through the diode D31, is passed due to the parasitic capacitance of the diode D31. The current which has passed due to the parasitic capacitance of the diode D31, together with the current which has passed due to the parasitic capacitance of the diode D11, becomes a common mode current that has the same phase as, but is reversed in polarity to, the current which has passed from the anode to the cathode of the diode D21 during the same period. The switch elements 111, 211, and 311 include the MOSFET Q11, the MOSFET Q22, and the MOSFET Q31, as well as the MOSFET Q12, MOSFET Q21, and MOSFET Q32, which are turned on and off synchronously. The switching operations of the switch elements 111, 211 and 311 are performed at the same timing.

The noise generated by the switching operations of the switch elements 111, 211 and 311 is superimposed on the current which has passed through the diodes D11, D21 and D31, and the current which has passed through the parasitic capacitances of the diodes D11, D21 and D31, at the same timing. The noise component of the current which has passed due to the parasitic capacitances of the diodes D11 and D31 is canceled by the noise component of the current passed through the diode D21 during the same period. The noise component of the current which has passed due to the parasitic capacitances of the diode D21 is canceled by the noise component of the current passed through the diodes D11 and D31 during the same period. Since the polarity of the noise of the current which has passed through the diodes D11, D21 and D31 and the noise of the current which has passed due to the parasitic capacitances of the diodes D11, D21 and D31 during the same period are opposite, they do not add together at the output terminals OUT1 and OUT2.

In this embodiment, when three power conversion circuits 10, 20 and 30 are connected in parallel to increase the output of the power conversion device 1, the noise generated in the power conversion circuits 10, 20 and 30 are not simultaneously output to the output terminals OUT1 and OUT2. Also in this embodiment, the noise generated in the power conversion circuits 10, 20 and 30 is controlled to not be added together at the output terminals OUT1 and OUT2 to become large noise. Since the noise generated in the power conversion circuits 10, 20 and 30 does not appear in a large amplitude at the output terminals OUT1 and OUT2, it is possible to suppress an increase in the noise superimposed on the power supplied to the load RLoad connected to the output terminals OUT1 and OUT2. When noise generated in the power conversion circuits 10, 20, and 30 is filtered out, a filter corresponding to the magnitude of noise generated in the power conversion circuits 10, 20, and 30 may be provided in each of the power conversion circuits 10, 20, and 30. When noise generated in the power conversion circuits 10, 20, and 30 is filtered out, a filter having a removal capability corresponding to a large noise generated by adding up the noises generated is not required, so that an increase in the size of the noise filter due to an increase in output of the power conversion device 1 can be suppressed.

### (Modification of Second Embodiment)

In the second embodiment, the control unit 40 may also adjust the control contents of at least one of the switch elements 111 and 311 of the first power conversion circuits 10 and 30, or the switch element 211 of the second power conversion circuit 20. The control contents can be adjusted by the control unit 40, based on the DC power voltages of the output terminals OUT1 and OUT2. The DC power voltages of the output terminals OUT1 and OUT2 may be measured by the output voltmeter 50 illustrated in FIG. 5, for example. When the control unit 40 determines that the total DC power of the first power conversion circuits 10 and 30 is not balanced with the DC power of the second power conversion circuit 20, the control unit 40 may adjust the control contents of at least one of the switch elements 111 and 311, or the switch element 211.

### (Modifications of First and Second Embodiments)

In the first and second embodiments, two or three power conversion circuits are connected in parallel between the input terminals IN1 and IN2 and the output terminals OUT1 and OUT2, but four or more power conversion circuits may be connected in parallel as long as there are at least two power conversion circuits. In this case, at least two or more power conversion circuits need to include one or more first power conversion circuits and one or more second power conversion circuits. The number of the first power conversion circuits and the number of the second power conversion circuits may be the same or different.

The rectifying elements of the rectifying circuits 120, 220, and 320 may be elements other than the diodes D11, D21, and D31. For example, a body diode, which is also called a parasitic diode of the MOSFETs Q11, Q12, Q21, Q22, Q31, and Q32, may be used as a rectifying element instead of the diodes D11, D21, and D31 by aligning the orientations of the cathode and the anode. The rectifying element may be, for example, a switch element for interrupting one polarity section of the high-frequency AC power that is output from the inverter circuits 110, 210, and 310.

Note that the embodiments described above are examples of the present invention. Therefore, the present invention is not limited to the embodiments described above, and needless to say, various modifications for other embodiments are possible, depending on design and other factors as long as they do not depart from the technical concept of the present invention.

### REFERENCE SIGNS LIST

1 Power converter
10, 30 First power conversion circuit
20 Second power conversion circuit
40 Control unit
110, 210, 310 Inverter circuit
111, 211, 311 Switch element (bidirectional switch)
112, 212, 312 LC Resonance circuit
120, 220, 320 Rectifying circuit
C11, C21, C31 Shunt capacitor
D11, D21, D31 Diode (rectifying element)
IN1 First input terminal
IN2 Second input terminal
L11, L21, L31 Choke inductor
Q11, Q21, Q31 MOSFET (first switch element)
Q12, Q22, Q32 MOSFET (second switch element)
RLoad DC load (load)

## Claims

1. A method of controlling a power conversion device comprising a pair of input terminals to which AC power is input, at least two or more power conversion circuits connected in parallel to the pair of input terminals, and a pair of output terminals to which a load is connected, wherein
the power conversion circuit including:
an inverter circuit having an LC resonant circuit that generates a high-frequency AC current from the AC power input to the pair of input terminals, and
a rectifying element that rectifies the high-frequency AC current generated in the inverter circuit, and that outputs power after rectification to the pair of output terminals,
the inverter circuit including:
a bidirectional switch for switching directions and an on/off state of a current flowing between the pair of input terminals, and
a shunt capacitor connected between the pair of input terminals in parallel with the bidirectional switch,
the at least two or more power conversion circuits include a first power conversion circuit and a second power conversion circuit, each connected to the pair of input terminals in such a manner that the rectifying directions of the rectifying elements are opposite to each other,
the method comprises controlling switching operation of the bidirectional switches of the first and second power conversion circuits so that power after rectification using the rectifying element of the first power conversion circuit, and power after rectification using the rectifying element of the second power conversion circuit, are alternately output to the pair of output terminals at a cycle in which the polarities of the high-frequency AC current are switched.

2. The method of controlling a power conversion device according to claim 1, further comprising:
controlling the switching operation of the bidirectional switch of the first power conversion circuit and the second power conversion circuit so that directions of currents flowing between the pair of input terminals are reversed between the first power conversion circuit and the second power conversion circuit.

3. The method of controlling a power conversion device according to claim 1 or 2, wherein
the bidirectional switch has a series circuit of a first switch element and a second switch element; and further comprising:
synchronously turning on the first switch element of the bidirectional switch of the first power conversion circuit, and the second switch element of the bidirectional switch of the second power conversion circuit, each connected to the first input terminal of the pair of input terminals, and synchronously turning on the second switch element of the bidirectional switch of the first power conversion circuit, and the first switch element of the bidirectional switch of the second power conversion circuit, each connected to the second input terminal of the pair of input terminals.

4. The method of controlling a power conversion device according to any one of claims 1 to 3, wherein
the bidirectional switch has a series circuit of a first switch element and a second switch element; and further comprising:
turning the first switch element of the bidirectional switch in the first power conversion circuit, and the second switch element of the bidirectional switch in the second power conversion circuit, each connected to the first input terminal of the pair of input terminals, on and off using a first control signal and a second control signal having a frequency difference within a predetermined range including zero, and turning the second switch element of the bidirectional switch in the first power conversion circuit, and the first switch element of the bidirectional switch in the second power conversion circuit, each connected to the second input terminal of the pair of input terminals, on and off using a third control signal and a fourth control signal having a frequency difference within a predetermined range including zero.

5. The method of controlling a power conversion device according to any one of claims 1 to 4, further comprising:
adjusting control contents of at least one of the switching operation of the bidirectional switch in the first power conversion circuit, or the switching operation of the bidirectional switch of the second power conversion circuit, based on power output from the pair of output terminals to the load so that power after rectification using the rectifying element in the first power conversion circuit, and power after rectification using the rectifying element in the second power conversion circuit, are equalized throughout the power conversion device.

6. The method of controlling a power conversion device according to any one of claims 1 to 5, wherein the rectifying element is a diode.

7. The method of controlling a power conversion device according to any one of claims 1 to 5, wherein the inverter circuit is an E-class inverter or a quasi-E-class inverter having a choke inductor connected between at least one input terminal of the pair of input terminals and the bidirectional switch.

8. A power conversion device comprising:
a pair of input terminals to which AC power is input;
at least two power conversion circuits connected in parallel to the pair of input terminals; and
a control unit, wherein:
the power conversion circuit includes
an inverter circuit that includes an LC resonance circuit, and that generates a high-frequency AC current from the AC power input to the pair of input terminals, and
a rectifying element that rectifies the high-frequency AC current generated in the inverter circuit, and outputs power after rectification to the pair of output terminals,
the inverter circuit includes
a bidirectional switch for switching directions and on/off of a current flowing between a pair of input terminals, and
a shunt capacitor connected between the pair of input terminals in parallel with the bidirectional switch,
the at least two or more power conversion circuits include a first power conversion circuit and a second power conversion circuit, each connected to the pair of input terminals in such a manner that the rectifying directions of the rectifying elements are opposite to each other,
switching operation of the bidirectional switches of the first and second power conversion circuits is controlled by the control unit so that power after rectification using the rectifying element of the first power conversion circuit, and power after rectification using the rectifying element of the second power conversion circuit, are alternately output to the pair of output terminals at a cycle in which the polarities of the high-frequency AC current are switched.
